# EUROPEAN PATENT SPECIFICATION

(11) **EP 1 024 324 B1**
(45) Date of publication and mention of the grant of the patent: **09.11.2005**
(21) Application number: 00101295.4
(22) Date of filing: 27.01.2000
(51) Int. Cl.: F16L 37/14

(54) **Device for mutually coupling the body of a valve element or the like and a connecting element**
Vorrichtung zur Kopplung eines Ventilkörpers oder Ähnlichem mit einem Verbindungsstück
Dispositif d'accouplement entre un corps de vanne ou similaire et un élément de connection

(30) Priority: 29.01.1999 IT MI990175; 04.05.1999 IT MI990966
(43) Date of publication of application: 02.08.2000
(73) Proprietor: Colombo, Renato, 28021 Borgomanero (Novara) (IT)
(72) Inventor: Colombo, Renato, 28021 Borgomanero (Novara) (IT)
(74) Representative: Modiano, Micaela Nadia

(56) References cited:
- DE-U- 8 119 526
- US-A- 4 289 339
- US-A- 4 519 638
- US-A- 4 701 074

## Description

The present invention relates to a device for mutually coupling the body of a valve element or the like and a connecting element.

It is known that the body of a valve element and the ducts that must be controlled by said valve element are generally mutually coupled by means of adapted connecting elements.

Currently, in order to mutually couple the body of the valve element and the connecting element, inside the body of the valve element there is provided a cylindrical seat with which an end portion of the connecting element, shaped like a cylindrical sleeve, mates.

An axial shoulder is formed on the portion of said cylindrical sleeve that protrudes from the seat provided in the body of the valve element and is directed away from the body of the valve element; said shoulder is engaged by an elastic ring which is activated by means of an annular element which is associated, so that it can slide axially, with the body of said valve element.

Once the cylindrical sleeve-shaped end has been locked axially with respect to the body of the valve element by means of the elastic ring, the annular element is locked by using a safety clamp which is interposed between the annular element and the body of the valve element, so as to be absolutely certain that the annular element cannot disengage the elastic ring that provides the axial locking of the connecting element with respect to the valve element body.

In the locked condition, the annular element rests against another axial shoulder which is provided on the portion of the cylindrical sleeve that lies outside the seat formed in the valve element body.

The hydraulic seal between the connecting element and the valve element body is achieved by means of a pair of gaskets, generally two O-rings, which are partially accommodated within two circumferential grooves formed on the outer lateral surface of the portion of sleeve that is inserted in the cylindrical seat. When the sleeve is inserted in the cylindrical seat, said gaskets engage against the lateral surface of the cylindrical seat.

This connection has a certain number of problems.

One of such problems is the structural complexity of the coupling, since the use of an annular element to activate the elastic ring entails the need for a further locking of the annular element by means of a safety clamp and by means of a shoulder which must be provided on the portion of the sleeve of the connecting element that protrudes from the cylindrical seat provided in the valve element body. This structural complexity, in addition to making it more complicated to assemble the connecting element on the valve element body, significantly affects the manufacturing costs of the connecting element and of the valve element body.

Moreover, owing to the fact that the sealing gaskets are partially accommodated in seats formed on the outer lateral surface of the portion of the sleeve that is inserted in the seat, it is not possible to use very thick gaskets, because their seats would reduce excessively the thickness of the portion of the sleeve that is inserted in the seat or, as an alternative, would require an excessive thickness of said portion of the sleeve.

Another problem is constituted by the need to protect, during storage, the region of the sleeve in which the gasket seats are formed.

Another problem is constituted by the possibility of rotation of the connecting element with respect to the valve element body.
US-A-4 701 074, DE-81 19526U, US-A-4 519 638 and US-A-4 289 339 all disclose a device for mutually coupling the body of a valve element and a connecting element according to the preamble of claim 1.

The aim of the present invention is to solve the above-cited problems, by providing a device for mutually coupling the body of a valve element or the like and a connecting element which is structurally simple, thus achieving greater simplicity both during manufacture and during assembly.

Within the scope of this aim, an object of the present invention is to provide a device which does not penalize excessively the structural cross-section of the connecting element in the region that mates with the body of the valve element or the like.

Another object of the invention is to provide a device which does not require particular protections for the connecting element during storage.

This aim, these objects and others which will become apparent hereinafter are achieved by a device for mutually connecting the body of a valve element or the like and a connecting element, as defined in claim 1.

Further characteristics and advantages of the invention will become apparent from the description of preferred but not exclusive embodiments of the device according to the invention, illustrated only by way of non-limitative example in the accompanying drawings, wherein:
Figure 1 is a partially sectional side elevation view of the device according to the invention in a first embodiment, in the connection between a valve element and two connecting elements;
Figure 2 is an enlarged-scale sectional view of Figure 1, taken along the plane II-II, illustrating the pin in the position in which it disengages the sleeve;
Figure 3 is a sectional view, similar to Figure 2, with the pin in the position in which it engages the sleeve;
Figure 4 is a sectional view, similar to Figures 2 and 3, of a different embodiment of the sleeve;
Figures 5 and 6 are sectional views, similar to Figures 2 and 3, of a second embodiment of the device according to the invention, respectively with the pin in the position in which it engages the sleeve and in the position in which it disengages said sleeve;
Figure 7 is a sectional view, similar to Figures 2 and 3, of an additional embodiment which does not fall under the scope of claim 1.
Figure 8 is an enlarged-scale view of a detail of Figure 7.
Figures 9 to 11 are sectional views, similar to Figure 2, of further embodiments which do not fall under the scope of claim 1.

With reference to the above figures, the device according to the invention comprises a substantially cylindrical seat 2 which is formed at one side of the body 3 of a valve element 4 or the like. The device comprises a substantially cylindrical sleeve 5 which is provided at the end of the connection 6 that is meant to be mated to the body 3 of the valve element 4. Sealing means 7 are interposed between the seat 2 and the portion of the sleeve 5 that is inserted in said seat 2.

It should be noted that the seat 2 and the portion of the sleeve 5 that can be inserted in said seat 2 may also be conical.

According to the invention, the sleeve 5 has, on the outer lateral surface of its portion that can be inserted in the seat 2, at least one axial shoulder which is directed away from the end of the sleeve 5 that can be inserted in the seat 2 and can be arranged, by inserting the sleeve 5 in the seat 2, at at least one passage 8 which is formed in the portion of the body 3 that is occupied by the seat 2. The passage 8 interferes with the lateral surface of the seat 2 and lies in a substantially rectilinear direction which is perpendicular to the axis 2a of the seat 2. The passage can be occupied by a locking pin 9 which forms an abutment for the shoulder, which is provided on the outer lateral surface of the portion of the sleeve 5 that is inserted in the seat 2, so as to prevent the axial extraction of the sleeve 5 from the seat 2.

Conveniently, said axial shoulder is formed by a groove 10 which is provided on the outer lateral surface of the portion of the sleeve 5 that is inserted in the seat 2. In practice, the groove 10 forms, on the outer lateral surface of the sleeve 5, two mutually opposite axial shoulders and the pin 9 engages between said two mutually opposite axial shoulders.

The groove 10 preferably lies circumferentially around the entire sleeve 5, and the passage 8, which as mentioned interferes with the lateral surface of the seat 2, is substantially tangent to the bottom of the groove 10 when the sleeve 5 is correctly inserted in the seat 2, so that the pin 9, inserted in said passage 8, engages a portion of the groove 10, producing the axial locking of the sleeve 5 with respect to the seat 2.

The sleeve 5 has a flange 11 which rests, once the sleeve 5 has been fully inserted in the seat 2, against the rim of the mouth of the seat 2. In this correct insertion condition, the groove 10 is located at the passage 8.

The device according to the invention can further comprise means for locking the rotation of the sleeve 5 about its own axis, which coincides with the axis 2a, with respect to the seat 2.

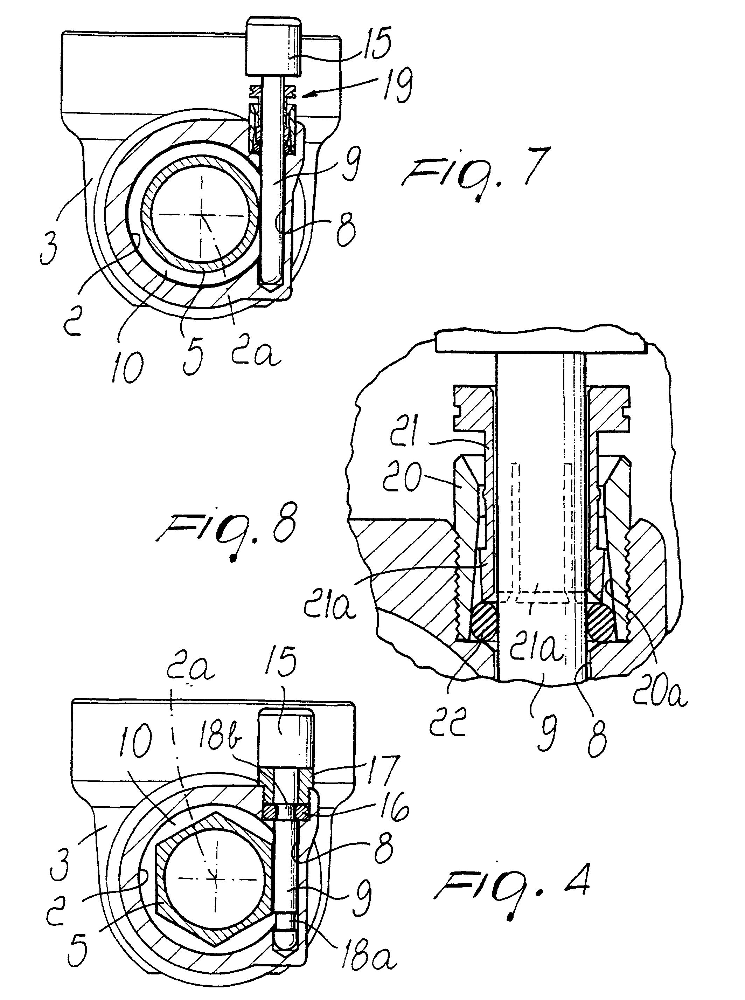

More particularly, as shown in Figure 4, the bottom of the groove 10 can be shaped so as to have a polygonal profile, so that the pin 9, by engaging the bottom of the groove 10 at one side of the polygon, also locks the rotation of the sleeve 5 with respect to the seat 2.

The groove 10 can be confined to the portion of the sleeve that is meant to be arranged at the passage 8. In this case, the groove 10 can have a rectilinear bottom which is parallel to the passage 8, so that the pin 9, by engaging the bottom of said groove, still locks the rotation of the sleeve 5 about its axis with respect to the seat 2.

As an alternative, the means for locking the rotation of the sleeve 5 about the axis 2a with respect to the seat 2 can also comprise a dowel 12 which is fixed to the body 3 of the valve element 4 at the rim of the mouth of the seat 2 and protrudes from said rim parallel to the axis 2a of the seat 2. Said dowel 12, by engaging an axial hole 13 provided for this purpose in the flange 11, prevents the rotation of the sleeve about the axis 2a with respect to the seat 2.

The pin 9 can be provided, at the end that lies opposite the end that is inserted in the passage 8, with a head 15 which partially protrudes from the portion of the body 3 in which the seat 2 is formed, so as to allow to insert and extract the pin 9 in and from the passage 8.

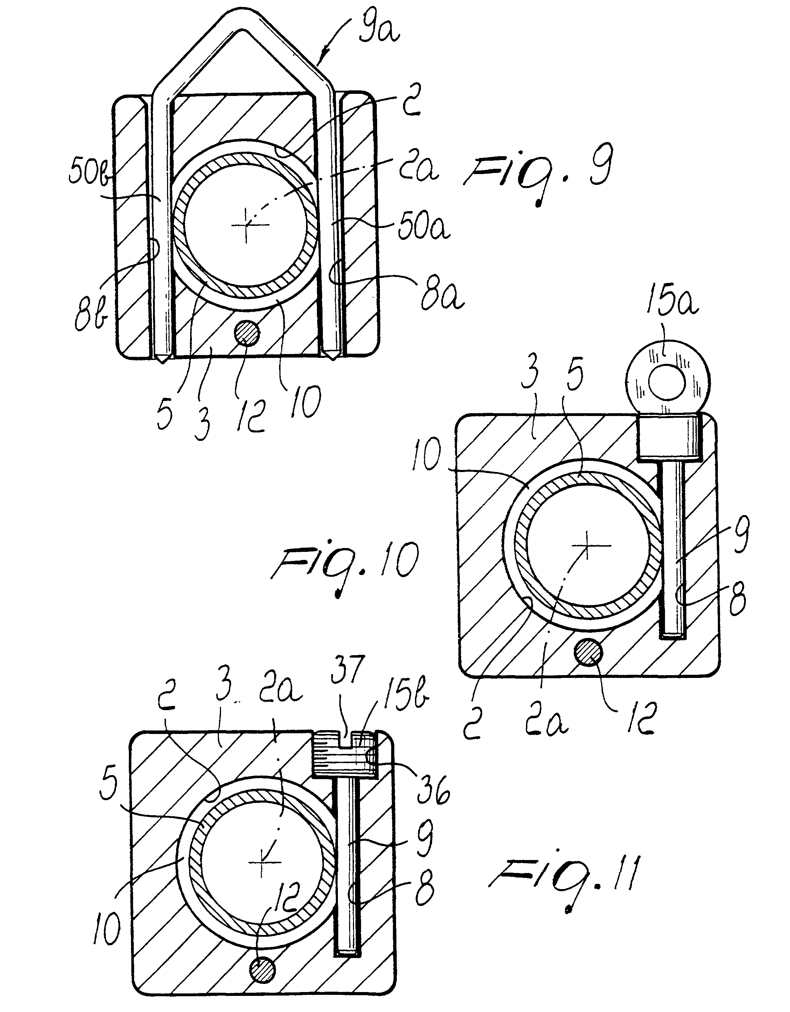

In the embodiment shown in Figure 10, the head of the pin 9, designated by the reference numeral 15a in said figure, is eyelet-shaped so as to further facilitate the extraction of the pin 9 from the passage 8.

Figure 11 illustrates another embodiment of the head of the pin 9, which in said figure is designated by the reference numeral 15b. According to this embodiment, the head 15b of the pin 9 is cylindrical and externally threaded and mates with a threaded seat 36 formed in the body 3 of the valve element 4 at the mouth of the passage 8.

The head 15b has a slit 37 in order to allow to screw or unscrew the head 15b in the threaded seat 36 during the insertion or extraction of the pin 9 with respect to the passage 8.

In the embodiment shown in Figure 9, the pin used to lock the sleeve 5 axially in the seat 2, designated by the reference numeral 9a in said figure, has a two-pronged body with two prongs 50a and 50b which are substantially parallel to each other. Instead of a single passage 8, in the portion of the body 3 of the valve element 4 that is occupied by the seat 2 there are two passages 8a and 8b which are arranged in two mutually parallel directions which are substantially rectilinear and perpendicular to the axis 2a of the seat 2. Said passages, which like the passage 8 interfere with the lateral surface of the seat 2, can be occupied by the two prongs 50a and 50b of the pin 9a and form an abutment for the shoulder or shoulders preferably formed by the circumferential groove 10.

The passages 8a and 8b are substantially tangent, in two mutually diametrically opposite regions, to the bottom of the circumferential groove 10 provided on the outer lateral surface of the sleeve 5.

The two prongs 50a and 50b of the pin 9a can also be slightly bent so as to increase, by elastic reaction, the grip of said prongs on the bottom of the circumferential groove 10.

The insertion or extraction of the pin 9a with respect to the passages 8a and 8b can be performed by maneuvering the portion of said pin that interconnects the prongs 50a and 50b and conveniently protrudes from the body 3 of the valve element 4.

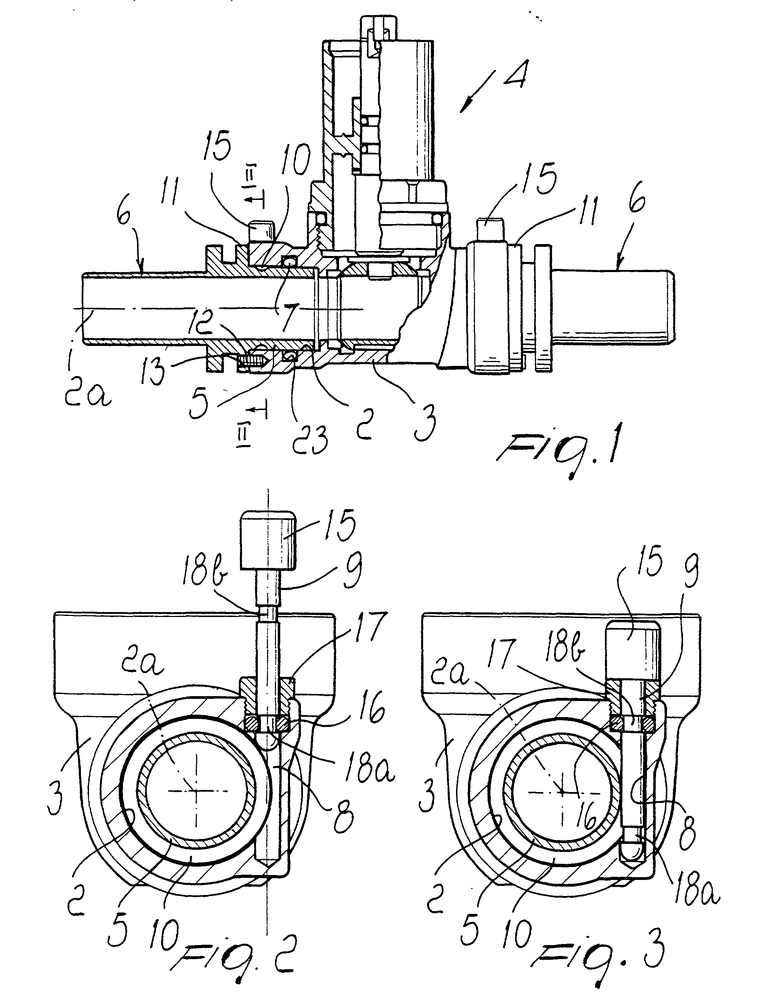

In the embodiments shown in Figures 1 to 8, the device preferably comprises means for retaining the pin 9 in the passage 8.

Said retention means, in the first embodiment, as shown in Figures 2, 3 and 4, comprise an elastically compressible ring 16 which is arranged coaxially in the passage 8 and can be crossed with friction by the pin 9.

More particularly, the mouth of the passage 8 is provided with a threaded seat, and the ring 16, which can be simply constituted by an O-ring, rests on the bottom of said threaded seat. A threaded bush 17 engages said threaded seat and locks the ring 16 in the passage 8. By partially screwing or unscrewing the bush 17, it is possible to vary the degree of expansion of the ring 16 toward the axis of the passage 8 and accordingly vary the degree of friction retention provided by the ring 16 on the pin 9.

Advantageously, the retention means can comprise means for stopping the sliding of the pin 9 along the passage 8 in a first position, in which the pin 9 is partially inserted in the passage 8 but is disengaged from the sleeve 5, and in a second position, in which the pin 9 is inserted in the passage 8 and engages the sleeve 5.

The stop means, as shown in Figures 2, 3 and 4, comprise two circumferential grooves 18a and 18b which are formed on the lateral surface of the pin 9 and are mutually spaced along the extension of the pin 9. The circumferential grooves 18a and 18b are arranged so that the groove 18a lies at the ring 16 when the pin 9 is only just inserted in the passage 8 and has not yet engaged the sleeve 5, as shown in Figure 2, and so that the other groove 18b is located at the ring 16 when it is fully inserted in the passage 8 and is therefore engaged by the sleeve 5, as shown in Figures 3 and 4. The ring 16, by engaging one groove or the other, stops the pin 9 in the two corresponding positions.

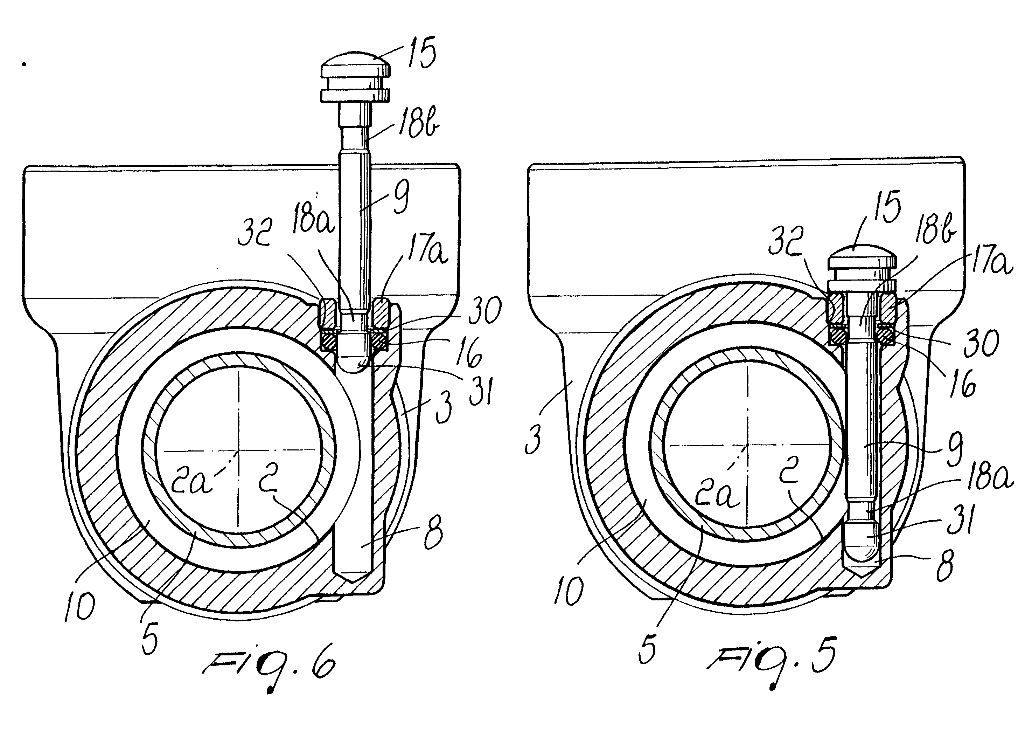

In the embodiment shown in Figures 5 and 6, the retention means comprise a substantially rigid ring 30 which is inserted and locked coaxially in the mouth of the passage 8 by means of a bush 17a which is similar to the bush 17. In this case, the end portion 31 of the pin 9 that lies furthest from the head has a larger transverse dimension or diameter than the remaining part of the pin 9. The inside diameter of the ring 30 is smaller than the diameter of the end portion 31 of the pin 9 but is larger than the diameter of the remaining part of the pin 9.

Also in this embodiment, the pin 9 is provided with the circumferential grooves 18a and 18b, and below the ring 30, in the inlet of the passage 8, there is an elastically compressible ring 16 which provides a frictional coupling with the pin 9. In this manner, the ring 16 is meant to brake the movement of the pin 9 along the passage 8, while the locking action, in order to prevent full extraction of the pin 9 from the passage 8, is performed by the ring 30.

It should be noted that the ring 30, before its insertion and locking in the mouth of the passage 9, can have a diameter which is even larger than the diameter of the end portion 31 of the pin 9, so that it can be fitted on the pin 9 together with the elastic ring 16. The outside diameter of the ring 31 is slightly greater than the diameter of the region of the mouth of the passage 8 at which it is locked by means of the bush 17a. In this manner, the subsequent locking of the ring 30 in the mouth of the passage 8 occurs by interference and causes a deformation of the ring, reducing its inside diameter so that said diameter is, on completion of the locking of the ring 30 in the mouth of the passage 8, smaller than the diameter of the end portion 31 but still larger than the diameter of the remaining part of the pin 9.

In order to facilitate the insertion and deformation of the ring 30, along the mouth of the passage 8 there is conveniently a conical narrower portion 32 beyond which the ring 30 can pass by deforming; the bush 17a stops against said conical narrower portion 32 and, in this embodiment, is fixed in the mouth of the passage 8 by means of a force-fit coupling instead of by means of a threaded coupling.

As shown in Figures 7 and 8, the retention means can instead comprise a clamp element 19 which is associated with the body 3 of the valve element at the mouth of the passage 8. Said clamp element 19 engages the pin 9 and can be deactivated on command in order to allow to extract the pin 9 from the passage 8.

More particularly, the clamp element 19 comprises a bush 20 which is fixed coaxially, for example by screwing, onto the mouth of the passage 8. The bush 20 accommodates, so that it can slide in an axial direction, a coaxial bushing 21 provided with fins 21a which can flex elastically toward and away from the axis of the bushing 21. The fins 21a engage on one side with a conical portion 20a of the internal surface of the bush 20 and on the other side with the lateral surface of the pin 9 that is inserted through the bushing 21. The conical portion 20a tapers toward the axial end of the bush 20 that is directed toward the outside of the body 3 of the valve element 4. The bushing 21 protrudes, by means of one of its axial ends, from the bush 20 and can be pressed axially along the bush 20 in contrast with elastic means, in order to pass from an engagement position, in which it engages the pin 9 with its fins 21a and locks it, to a disengagement position, in which the fins 21a disengage the pin 9.

The elastic means are constituted by an elastically compressible ring 22, for example an O-ring, which is arranged on the bottom of the seat that accommodates the bush 20 and the axial end of the bushing 21 that is directed toward the inside of the body 3 of the valve element 4.

In practice, by pressing the end of the bushing 21 that is arranged outside the bush 20, the bushing 21 is caused to slide along the bush 20, moving the fins 21a toward the wider region of the conical portion 20a of the internal surface of the bush 20. In this manner, the fins 21a disengage from the pin 9 or in any case loosen the grip applied to the pin 9, allowing it to be extracted from, or inserted in, the passage 8. The pressure applied to the bushing 21 produces the compression of the ring 22, which causes the movement of the bushing 21 by elastic reaction in the opposite direction once said pressure ceases; said bushing 21 moves, with its fins, toward the narrower region of the conical portion 20a of the internal surface of the bush 20. In this manner, the wings 21a flex toward the axis of the passage 8, locking the pin 9.

The sealing means 7, which are interposed between the sleeve and the seat 2, are conveniently constituted by a gasket, preferably an O-ring, which is partially accommodated in an annular seat 23 which is formed on the lateral surface of the seat 2 and engages the outer lateral surface of the sleeve 5.

The seat 23 for the gasket 7 is spaced toward the inside of the body 3 of the valve element 4 with respect to the region occupied by the passage 8.

The connecting element may have various shapes according to requirements, so long as it ends, at one of its ends, with a sleeve 5 provided as described above.

In Figure 1, the valve element 4 is constituted by a ball valve; however, the device according to the invention is not applicable exclusively to a valve element of this kind but can also be applied to valve elements of other kinds or to similar elements.

In Figure 1, the body 3 of the valve element 4 is connected to two connecting elements 6 by means of two devices according to the invention.

The connecting element 6 is fitted to the body 3 of the valve element by virtue of the device according to the invention as follows.

Initially, the gasket 7 is placed in the annular seat 23. The connecting element 6 is inserted with the sleeve 5 inside the seat 2 until the flange 11 lies against the rim of the mouth of the seat 2.

While the sleeve 5 is inserted in the seat 2, the groove 10 is arranged at the passage 8. At this point, the pin 9 is inserted in the passage 8, thus locking axially, and optionally also rotationally, the connecting element 6 with respect to the body 3 of the valve element 4.

In practice it has been observed that the device according to the invention fully achieves the intended aim and objects, since it provides the hermetic coupling between a connecting element and the body of a valve element or the like in a very simple manner and with a smaller number of components than required by conventional coupling devices.

It should be noted that since the seat for the gasket that provides the seal between the connecting element and the valve element body is formed in the valve element body, there are no problems as regards the thickness of the sleeve of the connecting element and there is no need for particular measures to protect said sleeve during storage and transport.

In practice, the materials used, as well as the dimensions, may be any according to requirements and to the state of the art.
Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for mutually connecting the body of a valve element or the like and a connecting element, comprising a substantially cylindrical or conical seat (2) formed in the body (3) of the valve element or the like and a substantially cylindrical or conical sleeve (5) which can be mated with said seat (2) and is provided at the end of the connecting element (6) to be connected to said valve element, sealing means (7) being interposed between said seat (2) and said sleeve (5), said sleeve having, on the outer lateral surface of its portion that can be inserted in said seat, at least one axial shoulder (10) which is directed away from the end of said sleeve (5) that can be inserted in said seat (2) and can be arranged, upon the insertion of said sleeve (5) in said seat, at least one passage (8) which is formed in the portion of said valve element body that is occupied by said seat (2) and interferes with the lateral surface of said seat (2); said passage (8) being arranged in a substantially rectilinear direction at right angles to the axis of said seat (2) and being engageable by a locking pin (9) which forms an abutment for said at least one shoulder (10) in order to prevent the axial extraction of said sleeve from said seat, **characterized in that** said locking pin (9) is non-threaded and **in that** retention means are provided for retaining said locking pin (9) in said passage (8) both when the pin (9) is engaged with the sleeve and when the pin (9) is disengaged from the sleeve (5), said retention means providing two distinct and spaced locking positions of the pin, respectively a first one corresponding to the pin engagement position and a second one corresponding to the pin disengagement position.

2. The device according to claim 1, **characterized in that** said at least one shoulder is formed by a circumferential groove (10) provided on the outer lateral surface of said sleeve (5).

3. The device according to claims 1 and 2, **characterized in that** said circumferential groove (10) forms, on the outer lateral surface of said sleeve (5), two mutually opposite axial shoulders between which said pin (9) engages.

4. The device according to one or more of the preceding claims, **characterized in that** said passage (8) is substantially tangent to the bottom of said circumferential groove (10) formed on the outer lateral surface of said sleeve (5).

5. The device according to one or more of the preceding claims, **characterized in that** it comprises means for locking the rotation of said sleeve (5) about its own axis with respect to said seat (2).

6. The device according to claim 5, **characterized in that** said means for locking the rotation of said sleeve (5) about its own axis are constituted by a polygonal profile of the bottom of the circumferential groove (10) which is formed on the lateral surface of said sleeve (5) and can be engaged by said pin (9).

7. The device according to claim 5, **characterized in that** said sleeve (5) has a flange (11) which rests, when said sleeve is mated with said seat (2), against the rim of the mouth of said seat (2); said means for locking the rotation of said sleeve comprising a dowel (12) which is associated with said body (3) of the valve element at said rim of the mouth of the seat (2) and runs parallel to the axis (2a) of said seat; said dowel (12) engaging, upon the insertion of said sleeve (5) in said seat, an axial hole (13) formed in said flange (11).

8. The device according to one or more of the preceding claims, **characterized in that** said pin (9) engages a portion of the lateral surface of said sleeve (5) which is parallel to said passage in order to lock the rotation of said sleeve (5) about its own axis with respect to said seat (2).

9. The device according to one or more of the preceding claims, **characterized in that** said retention means comprise an elastically compressible ring (16) which is arranged coaxially in said passage (8) and can be crossed with friction by said pin (9).

10. The device according to one or more of the receding claims, **characterized in that** said retention means comprise stop means for stopping the sliding of said pin (9) along said passage (8) in a first position, in which said pin is partially inserted in said passage (8) but is disengaged from said sleeve (5), and in a second position, in which said pin is inserted in said passage and engages said sleeve (5).

11. The device according to claim 10, **characterized in that** said stop means comprise two circumferential grooves (18a, 18b) which are formed on the lateral surface of said pin (9) and are mutually spaced along the extension of said pin, said circumferential grooves being engageable by said elastically compressible ring in order to retain said pin (9) in said two positions.

12. The device according to one or more of the preceding claims, **characterized in that** said retention means for retaining the pin in said passage comprise a substantially rigid ring (30) which is inserted and locked coaxially in the mouth of said passage (8); the end portion (31) of said pin (9) inserted in said passage (8) having a larger transverse dimension or diameter than the remaining part of the pin; said substantially rigid ring having an inside diameter which is smaller than the diameter of said end portion (31) of the pin (9) but is greater than the diameter of the remaining part of said pin.

## Patentansprüche

1. Vorrichtung zur Kopplung eines Ventilkörpers oder Ähnlichem mit einem Verbindungsstück, aufweisend einen im Wesentlichen zylindrischen oder konischen Sitz (2), welcher im Ventilkörper (3) oder Ähnlichem ausgebildet ist und eine im Wesentlichen zylindrische oder konische Buchse (5), die mit dem Sitz (2) ineinander greifen kann und die an dem Ende des Verbindungsstücks (6) vorgesehen ist, um mit dem Ventilstück verbunden zu werden, Dichtmittel (7), welche zwischen dem Sitz (2) und der Buchse (5) eingebracht sind, wobei die Buchse (5) an der äußeren seitlichen Oberfläche des Abschnitts, der in den Sitz (2) eingeführt werden kann, wenigstens eine axiale Schulter (10) aufweist, die vom Ende der Buchse (5), das in den Sitz (2) eingeführt werden kann, weggerichtet ist und beim Einfiihren der Buchse (5) in den Sitz (2) ausgerichtet werden kann, wenigstens einen Kanal (8), der in dem Abschnitt des Ventilkörpers (3) ausgebildet ist, der von dem Sitz (2) eingenommen ist und in die seitliche Oberfläche des Sitzes (2) eingreift; wobei der Kanal (8) in einer im Wesentlichen geradlinigen Richtung, im rechten Winkel zur Achse des Sitzes (2) angeordnet ist und ein Verriegelungsstift (9) in diesen eingreifen kann, der ein Gegenstück zu der wenigstens einen Schulter (10) bildet, um das axiale Auskoppeln der Buchse (5) aus dem Sitz (2) zu verhindern, **dadurch gekennzeichnet, dass** der Verriegelungsstift (9) gewindelos ist und dass Arretiermittel vorgesehen sind um den Verriegelungsstift (9) in dem Kanal (8) zu verriegeln, sowohl wenn der Stift (9) in die Buchse (5) eingreift als auch wenn der Stift (9) von der Buchse (5) gelöst ist, wobei das Arretiermittel zwei verschiedene und beabstandete Verriegelungsstellungen für den Stift (9) vorsieht, jeweils eine erste zu der Eingriffsstellung des Stiftes (9) zugehörige und eine zweite zu der Lösestellung des Stiftes (9) zugehörige.

2. Vorrichtung nach Anspruch 1, **dadurch gekennzeichnet, dass** die wenigstens eine Schulter durch eine umlaufende Nut (10) ausgebildet ist, welche an der seitlichen Oberfläche der Buchse (5) vorgesehen ist.

3. Vorrichtung nach Anspruch 1 und 2, **dadurch gekennzeichnet, dass** die umlaufende Nut (10) auf der seitlichen Oberfläche der Buchse (5) zwei sich axial gegenüberliegende Schultern bildet, zwischen denen der Stift (9) eingreift.

4. Vorrichtung nach einem oder mehreren der vorhergehenden Ansprüche, **dadurch gekennzeichnet, dass** der Kanal (8) im Wesentlichen den Boden der umlaufenden Nut (10), welche an der seitlichen Oberfläche der Buchse (5) ausgebildet ist, berührt.

5. Vorrichtung nach einem oder mehreren der vorhergehenden Ansprüche, **dadurch gekennzeichnet, dass** diese Mittel aufweist, um die Drehung der Buchse (5) bezüglich des Sitzes (2) um ihre eigene Achse zu verriegeln.

6. Vomichtung nach Anspruch 5, **dadurch gekennzeichnet, dass** die Mittel zum Verriegeln der Drehung der Buchse (5) um ihre eigene Achse von einem mehreckigen Profil am Boden der umlaufenden Nut (10), welche an der seitlichen Oberfläche der Buchse (5) ausgebildet ist und in die der Stift eingreift, gebildet werden.

7. Vorrichtung nach Anspruch 5, **dadurch gekennzeichnet, dass** die Buchse (5) einen Flansch (11) aufweist, der am Rand des Öffnung des Sitzes (2) anliegt, wenn die Buchse (5) mit dem Sitz (2) ineinander greift; wobei die Mittel zum Verriegeln der Drehung der Buchse (5) einen Dübel (12) aufweist, der am Rand der Öffnung des Sitzes (2) mit dem Ventilkörper (3) in Verbindung steht und parallel zu der Achse (2a) des Sitzes (2) verläuft; wobei der Dübel (12) nach Einführung der Buchse (5) in den Sitz (2) in eine Längsbohrung (13) eingreift, die im Flansch (11) ausgebildet ist.

8. Vorrichtung nach einem oder mehreren der vorhergehenden Ansprüche, **dadurch gekennzeichnet, dass** der Stift (9), um die Drehung der Buchse (5) um ihre eigene Achse in Bezug auf den Sitz (2) zu verhindern, in einen Abschnitt der seitlichen Oberfläche der Buchse (5) eingreift, der parallel zu dem Kanal angeordnet ist.

9. Vorrichtung nach einem oder mehreren der vorhergehenden Ansprüche, **dadurch gekennzeichnet, dass** das Arretiermittel einen elastischen, komprimierbaren Ring (16) aufweist, der koaxial in dem Kanal (8) angeordnet ist und den der Stift (9) gegen Reibung durchschreiten kann.

10. Vorrichtung nach einem oder mehreren der vorhergehenden Ansprüche, **dadurch gekennzeichnet, dass** die Arretiermittel Haltemittel aufweisen, um ein Gleiten des Stifts (9) entlang des Kanals (8) in einer ersten Stellung, in der der Stift (9) teilweise in den Kanal (8) eingeführt ist aber in der er nicht in die Buchse (5) eingreift und in einer zweiten Stellung, in der der Stift (9) in den Kanal (8) eingeführt ist und in die Buchse (5) eingreift, zu unterbinden.

11. Vorrichtung nach Anspruch 10, **dadurch gekennzeichnet, dass** die Haltemittel zwei umlaufende Kanäle (18a, 18b) aufweisen, die an der seitlichen Oberfläche des Stifts (9) ausgebildet sind und die um die Ausdehnung des Stiftes (9) voneinander entfernt sind, wobei der elastische komprimierbare Ring in die umlaufenden Kanäle eingreifen kann, um den Stift (9) in den zwei Stellungen zu arretieren.

12. Vorrichtung nach einem oder mehreren der vorhergehenden Ansprüche, **dadurch gekennzeichnet, dass** die Arretiermittel zum Arretieren des Stifts (9) in dem Kanal (8) einen im Wesentlichen starren Ring (30) aufweisen, der koaxial in der Öffnung des Kanals (8) eingebracht und befestigt ist; wobei der Endabschnitt (31) des Stifts (9) der in den Kanal (8) eingeführt ist eine größere Querausdehnung oder einen größeren Durchmesser hat, als der übrige Teil des Stiftes (9); wobei der im Wesentlichen starre Ring einen Innendurchmesser hat, der kleiner ist als der Durchmesser des Endabschnitts (31) des Stiftes (9), der aber größer ist als der Durchmesser der übrigen Abschnitte des Stiftes (9).

## Revendications

1. Dispositif d'accouplement entre un corps d'un élément de vanne ou similaire et un élément de connexion, comprenant un siège (2) sensiblement cylindrique ou conique formé dans le corps (3) d'un élément de vanne ou similaire et un manchon (5) sensiblement cylindrique ou conique qui peut être réuni, en s'adaptant, audit siège (2) et qui est prévu à l'extrémité de l'élément de connexion (6) pour être accouplé audit élément de vanne, des moyens d'étanchéité (7) étant interposés entre ledit siège (2) et ledit manchon (5), ledit manchon ayant, sur la surface latérale externe de sa partie pouvant être insérée dans ledit siège, au moins un épaulement axial (10) qui est dirigé à l'opposé de l'extrémité du dit manchon (5) pouvant être inséré dans ledit siège (2) et qui peut être agencé, après l'insertion du dit manchon (5) dans ledit siège, dans au moins un passage (8) qui est formé dans la partie du dit élément de vanne qui est occupé par ledit siège (2); ledit passage (8) étant agencé dans une direction sensiblement rectiligne perpendiculaire à l'axe du dit siège (2) et pouvant venir en prise avec une goupille de verrouillage (9) qui forme une butée pour ledit au moins un épaulement (10) de façon à prévenir l'extraction axiale du dit manchon du dit siège, **caractérisé en ce que** ladite goupille de verrouillage (9) n'est pas filetée et **en ce que** des moyens de retenue sont prévus pour retenir ladite goupille de verrouillage (9) dans ledit passage (8) à la fois lorsque la goupille (9) vient en prise avec le manchon (5) et lorsque la goupille (9) est dégagée du manchon (5), lesdits moyens de retenue présentant deux positions de verrouillage de la goupille distinctes et espacées, respectivement une première correspondant à la position d'engagement de la goupille et une deuxième correspondant à la position de désengagement de la goupille.

2. Dispositif selon la revendication 1, **caractérisé en ce que** ledit au moins un épaulement est formé par une rainure circonférentielle (10) prévue sur la surface latérale externe du dit manchon (5).

3. Dispositif selon les revendications 1 et 2, **caractérisé en ce que** ladite rainure circonférentielle (10) forme, sur la surface latérale externe du dit manchon (5), deux épaulements axiaux mutuellement opposés entre lesquels ladite goupille (9) vient en prise.

4. Dispositif selon une ou plusieurs des revendications précédentes, **caractérisé en ce que** ledit passage (8) est sensiblement tangent à la partie inférieure de ladite rainure circonférentielle (10) formée sur la surface latérale extérieure du dit manchon (5).

5. Dispositif selon une ou plusieurs des revendications précédentes, **caractérisé en ce qu'**il comprend des moyens pour bloquer la rotation du dit manchon (5) autour de son axe par rapport audit siège (2).

6. Dispositif selon la revendication 5, **caractérisé en ce que** lesdits moyens pour bloquer la rotation du dit manchon (5) autour de son axe sont constitués par un profil polygonal de la partie inférieure de ladite rainure circonférentielle (10) qui est formée sur la surface latérale du dit manchon (5) et qui peut venir en prise avec ladite goupille (9).

7. Dispositif selon la revendication 5, **caractérisé en ce que** ledit manchon (5) présente une collerette (11) qui repose, lorsque ledit manchon (5) est réuni au dit siège (2), contre le bord de l'entrée du dit siège (2) ; lesdits moyens pour bloquer la rotation du dit manchon comprenant un goujon (12) qui est associé avec ledit corps de l'élément de vanne (3) au niveau du dit bord de l'entrée du siège (2) et évolue parallèlement à l'axe (2a) du dit siège (2); ledit goujon (12) venant en prise, après l'insertion du dit manchon (5) dans ledit siège (2), avec un trou axial (13) formé dans ladite collerette (11).

8. Dispositif selon l'une ou plusieurs des revendications précédentes, **caractérisé en ce que** ladite goupille (9) vient en prise avec une partie de la surface latérale du dit manchon (5) qui est parallèle audit passage afin de bloquer la rotation du dit manchon (5) autour de son axe par rapport audit siège (2).

9. Dispositif selon l'une ou plusieurs des revendications précédentes, **caractérisé en ce que** lesdits moyens de retenue comprennent un anneau (16) compressible de manière élastique qui est agencée de façon coaxiale dans ledit passage (8) et qui peut être traversée par friction par ladite goupille (9).

10. Dispositif selon l'une ou plusieurs des revendications précédentes, **caractérisé en ce que** lesdits moyens de retenue comprennent des moyens d'arrêt pour arrêter le coulissement de ladite goupille (9) le long du dit passage (8) dans une première position, dans laquelle ladite goupille est en partie insérée dans ledit passage (8) mais est désengagée du dit manchon (5), et dans une deuxième position, dans laquelle ladite goupille est insérée dans ledit passage et vient en prise avec ledit manchon (5).

11. Dispositif selon la revendication 10, **caractérisé en ce que** lesdits moyens d'arrêt comprennent deux rainures circonférentielles (18a, 18b) qui sont formées sur la surface latérale de ladite goupille (9) et qui sont mutuellement espacées le long de l'extension de ladite goupille, lesdites rainures circonférentielles pouvant venir en prise avec ledit anneau (16) compressible de manière élastique afin de retenir ladite goupille (9) dans lesdites deux positions.

12. Dispositif selon l'une ou plusieurs des revendications précédentes, **caractérisé en ce que** lesdits moyens de retenue pour retenir la goupille dans ledit passage comprennent un anneau (30) sensiblement rigide qui est insérée et verrouillée de manière coaxiale dans l'entrée du dit passage (8); la partie d'extrémité (31) de ladite goupille (9) insérée dans ledit passage (8) ayant une dimension transversale ou diamètre plus grand que la partie restante de la goupille; ledit anneau sensiblement rigide ayant un diamètre intérieur qui est plus petit que le diamètre de la partie d'extrémité (31) de la goupille (9) mais qui est plus grand que le diamètre de la partie restante de ladite goupille.
